# EUROPEAN PATENT APPLICATION

(11) **EP 4 574 352 A1**
(43) Date of publication of application: **25.06.2025**
(21) Application number: 24220523.5
(22) Date of filing: 17.12.2024
(51) Int. Cl.: B25J 13/08

(54) **SYSTEM AND METHOD FOR FAULT-TOLERANT END OF TRAVEL DETECTION FOR GREATER THAN 360 DEGREE MOTION**

(30) Priority: 22.12.2023 US 202363614006 P
(71) Applicant: MacDonald, Dettwiler and Associates Inc., Brampton, Ontario L6Y 6K7 (CA)
(72) Inventor: Sachdev, Tej Singh, Brampton, Ontario, L6Y 6K7 (CA); Haensel, James, Brampton, Ontario, L6Y 6K7 (CA); Charbonneau, Justin, Brampton, Ontario, L6Y 6K7 (CA); Fisher, Steve, Brampton, Ontario, L6Y 6K7 (CA)
(74) Representative: Grünecker Patent- und Rechtsanwälte PartG mbB

(57) **Abstract**

A system and method for detecting end of travel in a rotational joint with greater than 360° of travel are provided. The system includes first and second limit switches coupled to the rotational joint for signaling end of travel of the rotational joint in clockwise and counterclockwise directions; a limit switch cam ring configured to actuate the first limit switch at a first rotational position in the clockwise direction and the second limit switch at a second rotational position in the counterclockwise direction, the cam ring configured to rotate in the direction of joint rotation when the rotational joint is in an ambiguity region of joint travel; first and second cam ring return mechanisms for returning the cam ring to a default position after triggering the first and second limit switches, respectively; and an actuation pin mounted to the rotational joint such that the actuation pin follows joint rotation exactly, the actuation pin configured to actuate the cam ring.

## Description

### Technical Field

The following relates generally to rotary joints, and more particularly to systems and methods for fault-tolerant end of travel detection in joints providing for more than 360° of motion.

### Introduction

Consider a rotary joint with more than 360° of motion, but whose total motion is limited in some way. In some examples, total motion may be limited by physical constraints, such as associated cables. If the joint rotates too far, the cable harness can be put under tension and, with enough load, may fail.

Allowing a range of travel in excess of 360° creates a rotation ambiguity problem. Some position sensors can detect the angular position within a given rotation (0° to 360°) but cannot detect whether one or more full rotations have occurred. The uncertainty of whether a measured position is some modulo of 360° is referred to as ambiguity.

Current methods of rotary joint end of travel detection are complicated, or unreliable, such that single faults in a hardware or software component may result in incorrect end of travel determinations, and accordingly, hardware damage from over rotation.

Accordingly, there is a need for an improved system and method for end of travel detection for rotary joints that overcomes at least some of the disadvantages of existing systems and methods.

### Summary

A system for end of travel detection for a rotational joint is provided. The rotational joint has a travel range greater than 360°. The system includes: a first limit switch coupled to the rotational joint for signaling an end of travel of the rotational joint in a clockwise direction; a second limit switch coupled to the rotational joint for signaling an end of travel of the rotational joint in a counterclockwise direction; a limit switch cam ring mounted to the rotational joint, the cam ring configured to actuate the first limit switch at a first rotational position in the clockwise direction and the second limit switch at a second rotational position in the counterclockwise direction, the cam ring configured to rotate in the direction of joint rotation when the rotational joint is in an ambiguity region of joint travel; first and second cam ring return mechanisms for returning the cam ring to a default position after triggering the first and second limit switches, respectively; and an actuation pin mounted to the rotational joint such that the actuation pin follows joint rotation exactly, the actuation pin configured to actuate the cam ring.

In some embodiments, each of the first and second limit switches include two microswitches, and the cam ring includes first and second steps of different heights for triggering the two microswitches.

In some embodiments, the cam ring includes a first step for triggering the first limit switch and a second step for triggering the second limit switch.

In some embodiments, the cam ring includes a raised feature, and the actuation pin contacts the raised feature and pushes the cam ring ahead of the actuation pin as the rotational joint rotates.

In some embodiments, the cam ring and a rotor of the rotational joint only engage mechanically with one another to cause rotation of the cam ring in the direction of joint rotation when in an ambiguity region of joint travel, and the mechanical engagement is facilitated by the actuation pin.

In some embodiments, the ambiguity region is greater than -180° or greater than +180°.

In some embodiments, the cam ring and the rotor are mechanically disengaged when the rotational joint position is between 0 and 180° (or -180° and +180°) and free to rotate relative to one another.

In some embodiments, the actuation pin actuates the cam ring in a first direction only when in an ambiguity region of joint travel to actuate the first or second limit switch, and the cam ring return mechanism actuates the cam ring in a second direction opposite the first direction to de-actuate the actuated first or second limit switch and return the cam ring to a default state.

In some embodiments, during clockwise or counterclockwise rotation past 180° ("ambiguity region"), the actuation pin applies load to the cam ring to rotate the cam ring, and rotation of the cam ring actuates the first or second limit switch, respectively.

In some embodiments, the ends of travel in the clockwise and counterclockwise directions are the clockwise and counterclockwise extreme of the rotational design limit of the rotation joint, respectively.

In some embodiments, the cam ring includes first and second protruding tabs at equivalent respective positions before clockwise and counterclockwise end of travel positions, and the protruding tabs are used to return the cam ring to a default position via contact with the cam return mechanism.

In some embodiments, the cam ring return mechanism is mounted to the rotational joint such that the cam ring return mechanism remains static during joint rotation.

In some embodiments, the cam ring return mechanism includes first and second cam ring return mechanisms for rotating the cam ring in clockwise and counterclockwise directions, respectively.

In some embodiments, the cam ring return mechanism is a spring push rod.

In some embodiments, the cam ring return mechanism is a torsional spring.

In some embodiments, upon triggering the first or second limit switch, the triggered limit switch sends a switch signal to a control device configured to immediately stop rotational joint motor actuation in response to receiving the switch signal, thereby stopping rotation of the rotational joint.

A method of detecting end of travel in a rotational joint is also provided. The method includes: rotating a cam ring with rotation of the rotational joint only when the rotational joint is in an ambiguity region past 180° travel in a clockwise or counterclockwise direction by applying load to the cam ring in the ambiguity region; actuating, via the rotation of the cam ring, a limit switch with a cam step on the cam ring when an end of travel position of the rotational joint is reached; and returning the cam ring to a default position by rotating the cam ring in the opposite direction via contact of a protruding tab on the cam ring with a cam ring return mechanism.

In some embodiments, rotating the cam ring includes actuating the cam ring with an actuation pin mounted to the rotation joint such that the actuation pin rotation matches joint output rotation exactly.

In some embodiments, the cam ring return mechanism is a spring mechanism.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a robotic system including an end of travel detection system, according to an embodiment;
Figure 2 is a perspective view of an example embodiment of the robotic manipulator of Figure 1;
Figure 3 is a perspective view of an example embodiment of the rotational joint with greater than 360° of motion of Figure 1;
Figure 4A is a perspective view of an example embodiment of the end of travel detection system of Figure 1 used on the rotational joint of Figure 3;
Figure 4B is a front view of the end of travel detection system of Figure 4A; and
Figure 5 is a front view of the cam ring of the end of travel detection system of Figures 4A-4B.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to a system and method of fault tolerant end of travel detection, and more particularly to a system and method for detecting the end of travel for a rotational joint allowing for more than 360° of motion, in a fault tolerant manner.

In an embodiment, the system comprises a rotational joint providing for greater than 360° of motion. The system further comprises a rotary encoder (or positional sensor) and limit switches. The rotary encoder allows for the system to determine a current angular position of the rotational joint at any rotational point. The limit switches are each actuated by a cam ring at an extreme of the rotational design limit of the joint.

The system is configured such that it is single fault tolerant. If the rotary encoder switch fails, the limit switches provide sufficient data to determine that the rotational joint has reached the limit of its rotational range. Similarly, if the limit switches fail, the rotary encoder provides sufficient feedback to determine when the joint has reached the limit of its rotational range.

This redundant configuration provides for reliability, protecting the joint from failure from self-inflicted damage.

As described herein, a set of sensors, cams, and springs allows a rotary joint to rotate beyond 360° and allows the robust single fault tolerant detection of absolute position, which protects the joint from self-inflicted damage.

The fault-tolerant end of travel detection system described herein is configured to create sufficient digital information to detect the absolute position of the joint whose travel exceeds 360°, is tolerant to a single fault, and provides a clear and explicit hardware signal that the end of travel has been reached.

The system described herein is smaller, lighter, and less complex than a hard stop, while still being fault tolerant and therefore robust. The approach of the system described herein allows for a range of motion beyond 360°, rather than some bound within a single rotation of the joint.

The systems and methods described herein provide an improvement over existing technology. For example, some alternative systems may use an ambiguity switch combined with a hard stop. Failure in the ambiguity switch could not lead to harm in the joint because the hard stop would prevent over-travel. However, the inclusion of hard stops, especially those in joints with travel beyond 360°, results in a joint that is heavy and complex. Avoiding this heaviness and complexity can be particularly advantageous in space-based applications of rotational joints. Further, failure of the joint can be particularly problematic in applications, such as space-based missions and unmanned applications, where access to the system for repair or replacement is impractical.

Other alternative systems may use an ambiguity switch to provide data to a software system indicating which ambiguity region the joint is in (-360° to 0°, or 0° to +360^{°}). A failure in the software to assess the correct position (for example, due to an incorrect joint angle offset applied to the position sensor) can result in damage to the joint due to over travel.

The systems and methods described herein may provide advantages over known solutions, as they are more robust to failures. No failures in software or switch hardware can result in damage to the joint. The systems and methods described herein accomplish this advantage without the need for mass and complexity of a hard stop.

The present system and method provides for position-controlled rotary motion in excess of 360°.

The present system and method provides for a solution that complies with constraint on mass and volume that would discourage the use of a hard stop.

The system and methods described herein may be used in any application where a position-controlled mechanism rotates mechanically more than 360°, but whose motion is constrained in some manner. For example, rotary mechanisms wherein cables span each half of the rotary mechanism.

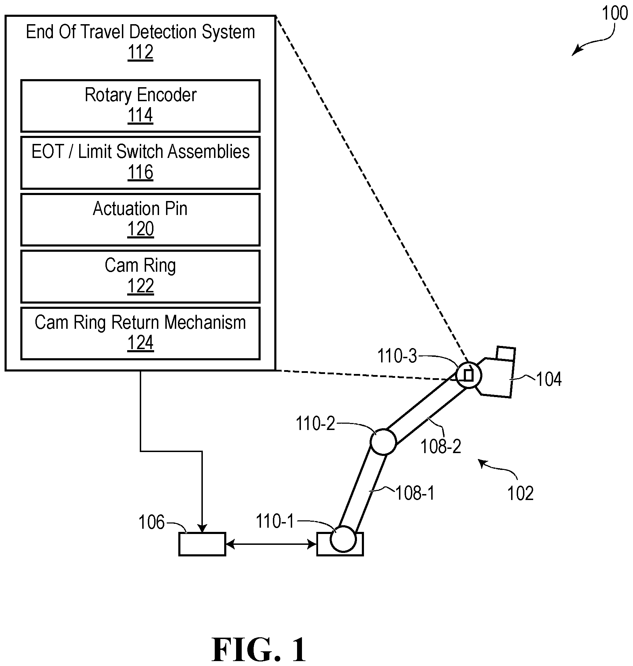

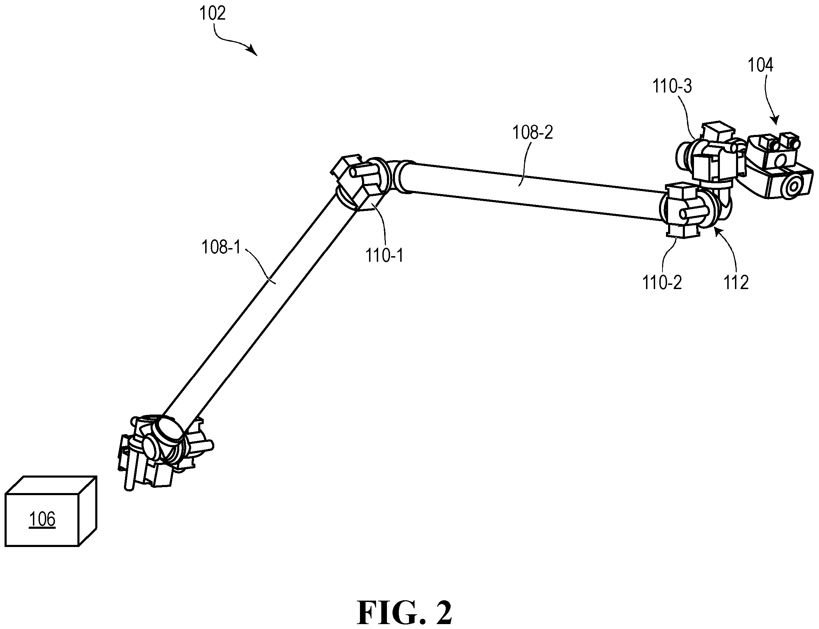

Referring now to Figure 1, shown therein is a robotic system 100, according to an embodiment. Simultaneous reference will also be made to Figures 2-5, which illustrate an example embodiment of components of robotic system 100 (similar components in Figure 1 and Figures 2-5 are given similar reference numbers).

The robotic system 100 is coupled to a platform. In a space-based application, the platform may be a satellite or spacecraft bus, or vehicle platform (e.g., on a rover or the like).

The robotic system 100 includes a robotic manipulator 102, a payload 104 coupled to a free end of the manipulator 102, and a control device 106 executing control software for controlling movement of the manipulator 102. The manipulator 102 includes booms 108-1, 108-2 and joints 110-1, 110-2, and 110-3. Generally, the control device 106 controls movement (e.g., rotation) of the joints 110-1, 110-2, and 110-3, thereby enabling controlled movement of the manipulator 102 and ultimately of the payload 104 (communication between the manipulator 102 and control device 106 is represented as a hashed line between the two).

An example embodiment of manipulator 102 is shown in Figure 2. Similar reference numbers refer to similar components.

Referring again to Figure 1, of joints 110-1, 110-2, 110-3, at least joint 110-3 is a rotational joint having greater than 360° of motion.

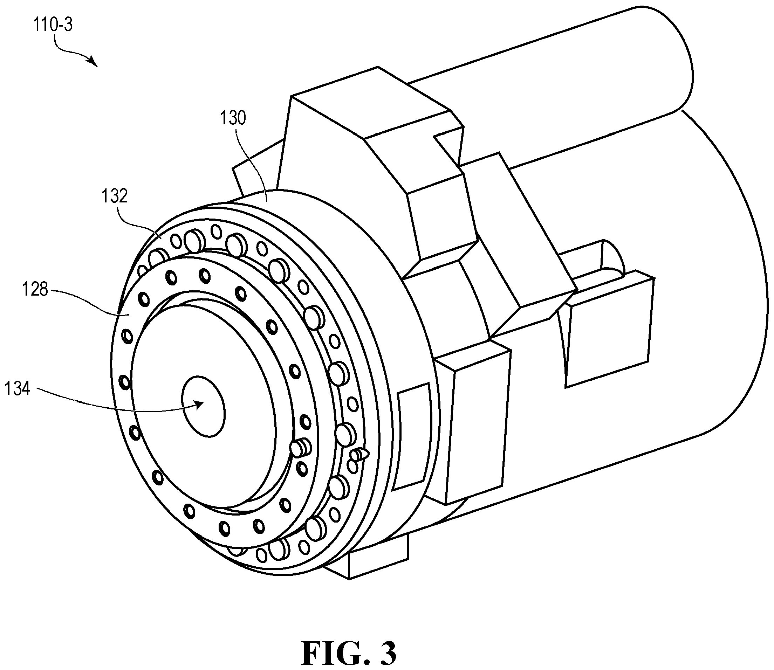

An example embodiment of joint 110-3 is shown in Figure 3. Rotary joint 110-3 of Figure 3 includes a rotary housing (or output flange) 128 which rotates as a stationary housing 130 remains static. An output bearing 132 is disposed between the rotary and stationary housings 128, 130. The joint 110-3 includes a passthrough tube 134 disposed along an axis of rotation of the joint 110-3 and which traverses stationary housing 130 and rotary housing 128. In some embodiments, the passthrough tube 134 is not present. The passthrough tube 134 may be coupled to the rotary housing 128 such that the passthrough tube 134 follows the rotation of the rotary housing 128 exactly.

Referring again to Figure 1, robotic system 100 further includes end of travel ("EOT") detection system 112. End of travel detection system 112 is implemented at the joint 110-3. End of travel detection system 112 is configured to detect an end of travel position and communicate a signal to control device 106 indicating that end of travel has been reached. The EOT detection system 112 may be single fault tolerant.

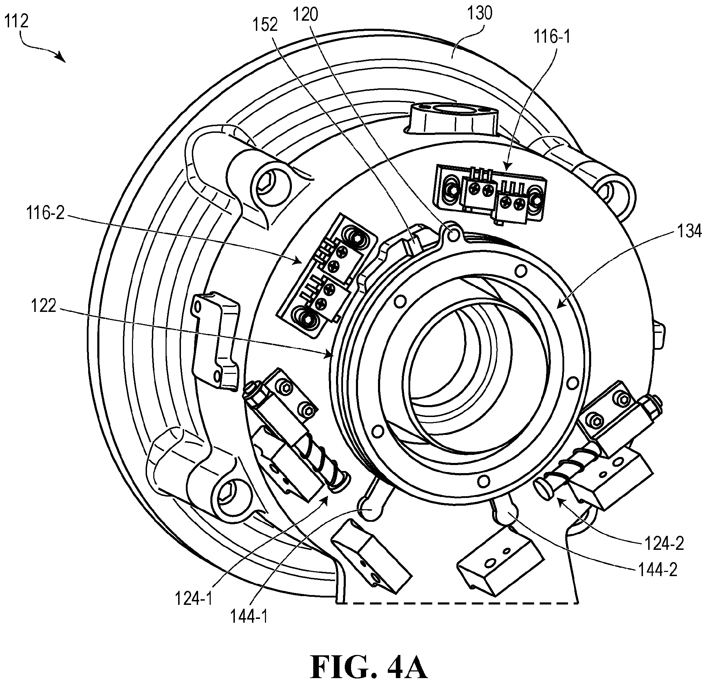

An example embodiment of the EOT detection system 112 is shown in Figures 4A-4B. Similar reference numbers denote similar components. The EOT detection system 112 of Figures 1 and 4A-4B may be used on the joint 110-3 of Figure 3. It should be noted that the position of the limit switch assemblies 116-1, 116-2 and cam ring return mechanisms 124-1, 124-2 in Figures 4A-4B represent one possible configuration and that, in other embodiments, the limit switch assemblies and/or the cam ring return mechanisms may be positioned differently. In some cases, the limit switches 116 and corresponding cam ring return mechanisms may be positioned or spaced such that upon the cam ring 122 triggering the limit switch, the protruding tabs on the cam ring 122 contact the corresponding cam ring return mechanism.

Referring again to Figure 1, the EOT detection system 112 includes a rotary encoder 114 (also referred to as output position sensor), and a set of first and second end of travel ("EOT") switch assemblies 116 (also referred to as limit switch assemblies) The EOT detection system 112 also includes actuation pin 120, cam ring 122, and cam ring return mechanism 124. The cam ring return mechanism 124 is configured to return the cam ring 122 to its default state or position. The default state or position may be a position at which steps or cams on the cam ring 122 that are used to trigger the first and second switch assemblies 116 are positioned between the first and second switch assemblies 116 (and thus not triggering either switch assembly). Cam return mechanism 124 may be referred to as a return-to-center mechanism or spring assembly. In variations, cam return mechanism 124 may include one or more pushrods or torsional springs. Cam return mechanism 124 may include first and second cam return mechanisms 124 positioned to return the cam ring 122 to its default state or position for clockwise and counterclockwise joint rotation, respectively. Generally, during rotation into the ambiguity region (e.g., clockwise, counterclockwise), the joint motion system applies load to the cam ring 122 to rotate the cam ring 122 (which causes the switch triggering features on the cam ring 122 to actuate the switches).

It should be noted that there are no hard stops in EOT detection system 112. End of travel indication is provided purely by the limit switch assemblies 116. Single fault tolerance is achieved by the use of redundant switches 142 on the limit switch assembly 116.

The rotary encoder 114 is configured to detect (angular) position of the joint 110-3 by converting rotational mechanical displacements into electrical signals. In an embodiment, the rotary encoder 114 is an optical encoder including an optical encoder disk and at least one optical readhead. The encoder disk and readhead may be mounted to the joint 110-3 such that the encoder disk rotates as the joint 110-3 rotates, while the readhead remains static.

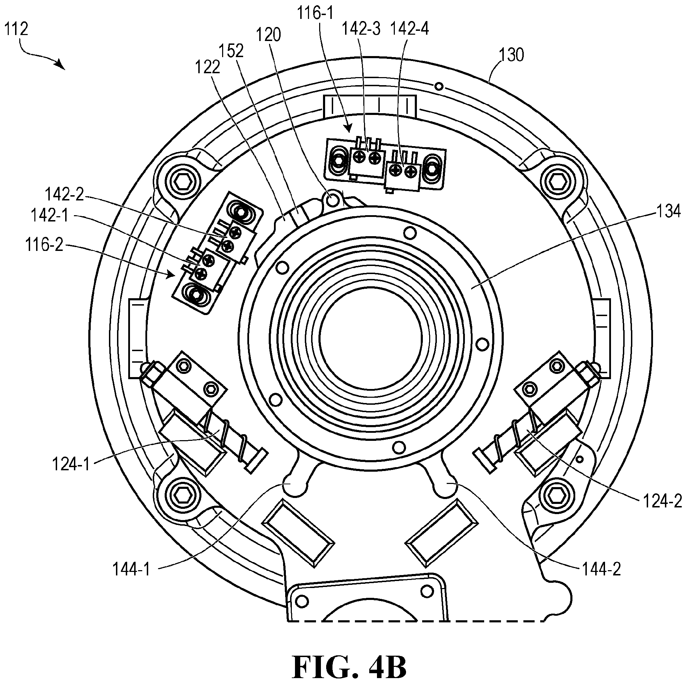

The EOT switch assemblies 116 are configured to sense when the joint 110-3 has reached its extreme ends of travel. The EOT switch assemblies 116 may use microswitches. In some embodiments, each of first and second EOT switches 116 include two switches for redundancy. The redundancy may provide single fault tolerance. In the example embodiment of Figures 4-6, the EOT detection system 112 includes first and second limit switch assemblies 116-1, 116-2, wherein each limit switch assembly includes two limit switches 142-1, 142-2, and 142-3, 142-4, respectively.

The EOT switches 116 are mounted on the joint 110-3 such that the first EOT switch assembly 116 is tripped when the joint 110-3 reaches a clockwise extreme end of travel (e.g., +200°) and the second EOT switch assembly 116 is tripped when the joint 110-3 reaches a counterclockwise extreme end of travel (e.g., -200°). In other words, the EOT switch assemblies 116 are positioned at both ends of travel of the joint 110-3.

The EOT detection system 112 includes cam ring 122 (or cam doughnut) that actuates switches of the EOT switch assemblies 116. The cam ring 122 includes a raised feature that is used to push the cam ring 122 (by actuation pin 120) and steps to actuate the EOT switch assemblies 116. The cam ring 122 is mounted on the joint 110-3 such that the cam ring 122 rotates when actuated. The cam ring 122 may be mounted on the joint 110-3 such that the cam ring 122 can rotate around the passthrough tube 134 when actuated.

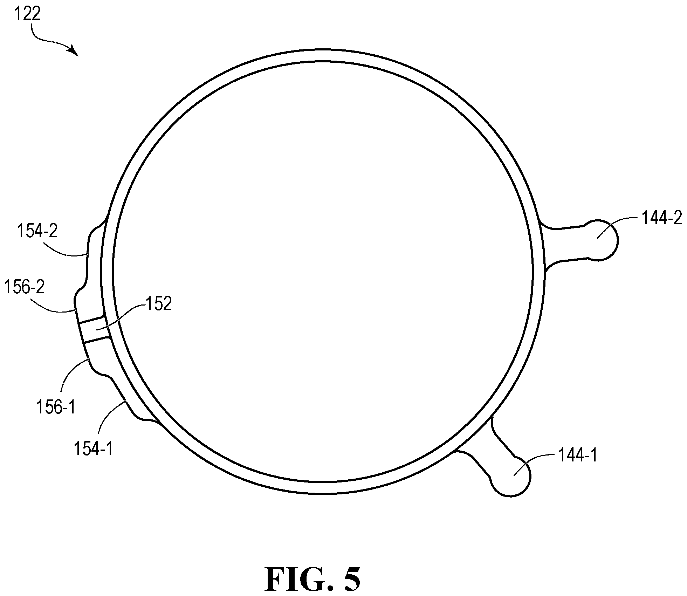

An example embodiment of cam ring 122, which is used in EOT detection system of Figures 4A-4B, is shown in Figure 5.

Cam ring 122 of Figure 5 includes a raised feature 152, first steps 154-1, 154-2 and second steps 156-1, 156-2, and first and second protruding tabs 144-1, 144-2 (referred to collectively and generically as tabs 144 and tab 144, respectively). Steps 154-1, 154-2, 156-1, 156-2 may also be referred to as "cam steps" or "cams".

Generally, first step 154-1 is used to trigger a first limit switch 142-1 of limit switch assembly 116-2 when the joint 110-3 is rotating counterclockwise and first step 154-2 is used to trigger a first limit switch 142-4of limit switch assembly 116-1 when the joint 110-3 is rotating clockwise.

Second step 156-1 is used to trigger a second limit switch 142-2 of limit switch assembly 116-2 when the joint 110-3 is rotating counterclockwise and second step 156-2 is used to trigger a second limit switch 142-3 of limit switch assembly 116-1 when the joint 110-3 is rotating clockwise.

First and second limit switches 142-1, 142-2 of limit switch assembly 116-2 are triggered simultaneously by first and second cam steps 154-1, 156-1, respectively. First and second limit switches 142-3, 142-4 of limit switch assembly 116-1 are triggered simultaneously by first and second cam steps 154-2, 156-1, respectively. In some embodiments, first and second limit switch assemblies many include only one limit switch, respectively, and the cam ring 122 includes a single respective step for triggering each limit switch (e.g., switches 144-1, 144-4, steps 154-1, 154-2).

Tabs 144-1, 144-2 contact spring assemblies 124-1, 124-2, respectively, as described herein.

Referring again to Figure 1, the EOT detection system 112 further includes actuation pin 120 (also referred to as cam ring actuation pin 120). The actuation pin 120 is coupled or fastened to a rotating component of the joint 110-3 such that the actuation pin follows the joint 110-3 output rotation exactly. The actuation pin 120 is used to actuate the cam ring (as described herein). An example embodiment of actuation pin 120 is visible in Figures 4A-4B.

As the joint 110-3 rotates, the actuation pin 120 contacts the raised feature (e.g., raised feature 152 of Figures 4A-4B and 5) on the cam ring 122 and pushes the cam ring 122 ahead of the actuator pin 120.

The cam ring 122 further includes protruding tabs (e.g., tabs 144-1, 144-2 of Figures 4A-5) at a position on the cam ring 122 before the end of travel position (e.g., 25° from EOT). The cam ring 122 may include two protruding tabs each at equivalent positions from EOT position (e.g., 25° from +/- 200°). As the cam ring 122 rotates with the joint 110-3, the tab 144 presses against a corresponding cam ring return spring pushrod,, compressing a cam ring return spring in the spring assembly 124. The cam ring spring assembly 124 (including pushrod) is mounted on the joint 110-3 to a stationary housing component such that the return spring pushrod remains static during joint 110-3 rotation.

The pushrods and cam doughnut 122 are implemented to allow for more than 360° of travel. If the joint rotor and cam doughnut 122 were rigidly fixed to one another, the end of travel switches 116 would be actuated at their desired position (e.g., +200° or -200°), and also those positions modulo 360°. To allow for more than 360° of motion but switch actuation only at the end of travel positions, the joint rotor 128 and cam doughnut 122 only engage mechanically with one another when in the ambiguity region (<-180°, >180°).

When the joint rotary position is between -180° to +180°, the cam doughnut 122 and rotor are disconnected mechanically, and free to rotate relative to one another. During clockwise rotation into the ambiguity region (>180°), the joint motion system applies load to the cam doughnut 122 to rotate it, and the first and second cam steps (e.g., first step 154-2 and second step 156-2 in a counterclockwise rotation example) actuate the end of travel switches.

After the joint turns counter-clockwise back out of the ambiguity region (<180°), the desired behavior is for the cam doughnut 122 to rotate also away from the switches 142 to de-actuate them. The push-rod accomplishes that return. The mirror of the behavior is implemented on the counter-clockwise direction (e.g., <-180°). It should be noted that a push-rod is one non-limiting example embodiment and that, in other embodiments, another return to center mechanism that returns the cam doughnut 122 to its default state may be used (e.g., implementing any return to center method). For example, in an alternate embodiment, the pushrods may be replaced with torsional springs.

The cam ring return spring 124 prevents the cam ring 122 from rotating into the EOT switches 142 due to vibration or operating loads when not being actuated by the actuation pin 120.

As the joint 110-3 rotates away from its end of travel position, the return spring pushrods of the spring assembly 124 push the cam ring 122 back to the before end of travel position (e.g., to the at 25° position before end of travel). The actuation pin 120 may then leave the cam ring 122 behind. Pushrods may be positioned based on the desired range of rotation provided the pushrods do not interact with the switches 142 (similar for torsional springs). The goal of the spring assembly 124 is to return the cam ring 122 to a position where the cam ring 122 is no longer triggering the switches 142. While the embodiment of Figures 4A-4B uses pushrods, other biasing methods may be used and may be advantageous based on the operational requirements (size, number of components, compactness, tolerances, etc.).

Referring again to Figure 1, when an EOT switch assembly 116 is triggered (i.e., by switch 144 actuation via cam 122), an EOT switch signal is sent from the switch assembly 116 to the control device 106. The control device 106 is configured to immediately stop joint motor actuation in response to receiving the EOT switch signal, stopping joint 110-3 rotation.

The goals of the switch architecture described herein are to allow for accurate measurement of the position of the rotational joint 110-3, which is allowed to travel more than +/-180°, and to enable a fault-tolerant design that does not require mechanical hard stops, which are challenging to implement in certain environments.

As described herein, the end of travel detection system for a rotary joint of the present disclosure provides compactness and the ability to package all components together. The EOT detection system provides a simple method of tracking rotation past 180°, basically logging via triggering of the limit switch 142. The floating cam ring 122 is selectively actuated by the actuator pin when the joint rotates past 180°.

A particular embodiment of switch architecture will now be described. In an embodiment, a switch architecture is implemented in which there are end of travel switches 142 at either end of the travel extreme.

As joint 110-3 motion is allowed to go beyond +/- 180°, the End of Travel (EOT) switches 142 (or limit switches 142) indicate the end of allowed travel. If the EOT switch 142 is actuated, the software component disallows further motion in the direction toward the EOT.

The position sensor 114 and end of travel switches 142 exist together to implement fault tolerance. In a scenario with no failure, the position sensors 114 are sufficient to measure the absolute position of the joint 110-3. The following failure scenarios demonstrate fault tolerance:

Failure in software, resulting in an error in position measurement:

In such cases, the EOT switch 142 will detect overtravel and halt the motion of the joint.

Failure of the EOT switch 142:

If the EOT switch 142 fails, the position sensor 114 accurately measures the position of the joint 110-3, and the software travel limits prevent over travel.

In an embodiment, normally closed (NC) switches are present for fault detection. It is expected that the joint 110-3 will operate in the +/-180° range most of the time. As such, a failed switch or circuit will be detectable at startup.

While the above description provides examples of one or more apparatus, methods, or systems, it will be appreciated that other apparatus, methods, or systems may be within the scope of the claims as interpreted by one of skill in the art.

## Claims

1. A system for end of travel detection for a rotational joint, wherein the rotational joint comprises a travel range greater than 360°, the system comprising:
a first limit switch coupled to the rotational joint for signaling an end of travel of the rotational joint in a clockwise direction;
a second limit switch coupled to the rotational joint for signaling an end of travel of the rotational joint in a counterclockwise direction;
a limit switch cam ring mounted to the rotational joint, the cam ring configured to actuate the first limit switch at a first rotational position in the clockwise direction and the second limit switch at a second rotational position in the counterclockwise direction, the cam ring configured to rotate in the direction of joint rotation when the rotational joint is in an ambiguity region of joint travel;
first and second cam ring return mechanisms for returning the cam ring to a default position after triggering the first and second limit switches, respectively; and
an actuation pin mounted to the rotational joint such that the actuation pin follows joint rotation exactly, the actuation pin configured to actuate the cam ring.

2. The system of claim 1, wherein each of the first and second limit switches include two microswitches, and wherein the cam ring includes first and second steps of different heights for triggering the two microswitches.

3. The system of claim 1, wherein the cam ring includes a first step for triggering the first limit switch and a second step for triggering the second limit switch.

4. The system of claim 1, wherein the cam ring includes a raised feature, and wherein the actuation pin contacts the raised feature and pushes the cam ring ahead of the actuation pin as the rotational joint rotates.

5. The system of claim 1, wherein the cam ring and a rotor of the rotational joint only engage mechanically with one another to cause rotation of the cam ring in the direction of joint rotation when in an ambiguity region of joint travel, and wherein the mechanical engagement is facilitated by the actuation pin.

6. The system of claim 5, wherein the ambiguity region is greater than -180° or greater than +180°.

7. The system of claim 6, wherein the cam ring and the rotor are mechanically disengaged when the rotational joint position is between 0 and 180° (or -180° and +180°) and free to rotate relative to one another.

8. The system of claim 1, wherein the actuation pin actuates the cam ring in a first direction only when in an ambiguity region of joint travel to actuate the first or second limit switch, and wherein the cam ring return mechanism actuates the cam ring in a second direction opposite the first direction to de-actuate the actuated first or second limit switch and return the cam ring to a default state.

9. The system of claim 1, wherein during clockwise or counterclockwise rotation past 180° ("ambiguity region"), the actuation pin applies load to the cam ring to rotate the cam ring, and rotation of the cam ring actuates the first or second limit switch, respectively.

10. The system of claim 1, wherein the cam ring includes first and second protruding tabs at equivalent respective positions before clockwise and counterclockwise end of travel positions, and wherein the protruding tabs are used to return the cam ring to a default position via contact with the cam return mechanism.

11. The system of claim 1, wherein the cam ring return mechanism is mounted to the rotational joint such that the cam ring return mechanism remains static during joint rotation.

12. The system of claim 1, wherein the cam ring return mechanism includes first and second cam ring return mechanisms for rotating the cam ring in clockwise and counterclockwise directions, respectively.

13. The system of claim 1, wherein the cam ring return mechanism is a spring push rod or a torsional spring.

14. The system of claim 1, wherein upon triggering the first or second limit switch, the triggered limit switch sends a switch signal to a control device configured to immediately stop rotational joint motor actuation in response to receiving the switch signal, thereby stopping rotation of the rotational joint.

15. A method of detecting end of travel in a rotational joint, the method comprising:
rotating a cam ring with rotation of the rotational joint only when the rotational joint is in an ambiguity region past 180° travel in a clockwise or counterclockwise direction by applying load to the cam ring in the ambiguity region;
actuating, via the rotation of the cam ring, a limit switch with a cam step on the cam ring when an end of travel position of the rotational joint is reached; and
returning the cam ring to a default position by rotating the cam ring in the opposite direction via contact of a protruding tab on the cam ring with a cam ring return mechanism.
